# DEMANDE DE BREVET EUROPEEN

(11) **EP 3 012 002 A1**
(43) Date de publication de la demande: **27.04.2016**
(21) Numéro de dépôt: 15189316.1
(22) Date de dépôt: 12.10.2015
(51) Int. Cl.: A63F 13/98

(54) **SUPPORT POUR APPAREILS ÉLECTRONIQUES**

(30) Priorité: 21.10.2014 FR 1460118
(71) Demandeur: Bigben Interactive SA, 59814 Lesquin Cedex (FR)
(72) Inventeur: FALC, Alain, 8500 Kortrijk (BE); DELRUE, Valentin, 59262 Sainghin en Mélantois (FR); MOREAU, Sébastien, 59000 Lille (FR)
(74) Mandataire: Poindron, Cyrille

(57) **Abrégé**

Support pour appareils électroniques, comprenant :
- une première portion de maintien agencée pour maintenir sur le support un premier appareil électronique comprenant des moyens d'affichage,
- une deuxième portion de maintien agencée pour maintenir sur le support un contrôleur de jeu,

caractérisé en ce que le deuxième portion de maintien comprend au moins une pièce fixe sur le support et une pièce mobile par rapport à la pièce fixe entre une position fermée dite de maintien du contrôleur de jeu et une position ouverte dans laquelle il est possible d'accoupler ou détacher le contrôleur de jeu à la deuxième portion de maintien,
et en ce que la pièce mobile est amovible et adaptée à la forme du contrôleur de jeu, de sorte à ce qu'une première pièce mobile permette d'attacher au support un premier modèle de contrôleur de jeu, et une deuxième pièce mobile, différente de la première pièce mobile, permette d'attacher au support un deuxième modèle de contrôleur de jeu.

## Description

La présente invention concerne de manière générale un support pour appareils électroniques, et en particulier du type des supports agencés pour maintenir un téléphone portable avec écran d'affichage (encore appelé smartphone) ou une tablette tactile.

De tels supports sont connus dans l'art antérieur, intégrés à un contrôleur de jeu, pour permettre de commander le téléphone portable ou la tablette pour jouer à un jeu vidéo. Cependant, un tel système présente l'inconvénient de voir acheter le contrôleur de jeu complet qui intègre le support. L'ergonomie est alors figée et l'utilisateur peut déjà avoir un ou plusieurs contrôleurs de jeu qui deviennent inutiles.

Un but de la présente invention est de répondre aux inconvénients de l'art antérieur mentionnés ci-dessus et en particulier, tout d'abord, de proposer un support pour appareils électroniques tels qu'un téléphone portable avec un écran d'affichage ou une tablette tactile, afin de la maintenir et de jouer ensuite avec un contrôleur de jeu indépendant.

Pour cela un premier aspect de l'invention concerne un support pour appareils électroniques, comprenant :
- une première portion de maintien agencée pour maintenir sur le support un premier appareil électronique comprenant des moyens d'affichage,
- une deuxième portion de maintien agencée pour maintenir sur le support un contrôleur de jeu,
caractérisé en ce que la deuxième portion de maintien comprend au moins une pièce fixe sur le support et une pièce mobile par rapport à la pièce fixe entre une position fermée dite de maintien du contrôleur de jeu et une position ouverte dans laquelle il est possible d'attacher ou détacher le contrôleur de jeu à la deuxième portion de maintien,
et en ce que la pièce mobile est adaptée à la forme du contrôleur de jeu, pour assurer le maintien du contrôleur de jeu sur le support pour appareils électroniques. Le support selon la présente invention comprend une pièce mobile qui est dédiée à la forme du contrôleur de jeu, ce qui permet de simplifier la conception entre plusieurs supports pour différents contrôleurs de jeu. La structure générale peut rester la même, seule la pièce mobile est à modifier. Le support selon la mise en oeuvre ci-dessus permet d'utiliser un contrôleur de jeu indépendant, puisque la pièce mobile permet de s'ouvrir et accoupler le contrôleur de jeu. Ce dernier est donc amovible par rapport au support et de plus, ce dernier peut s'accoupler avec un premier modèle ou un deuxième modèle de contrôleur de jeu sans changer tout le support, puisque seule la pièce mobile est spécifique au type de contrôleur de jeu.

Avantageusement, la pièce mobile possède une forme spécifique adaptée au contrôleur de jeu. En d'autres termes, la pièce mobile est préformée pour que sa forme épouse celle du contrôleur de jeu, et laisse tous les accès nécessaires. En conséquence, la pièce mobile présente des formes, et/ou des contours et/ou des évidements pour ne pas recouvrir de boutons, hauts parleurs, LEDs du contrôleur de jeu. L'utilisation est aisée, puisque la pièce mobile est préformée (donc rigide) et se positionne directement en position fermée en épousant le contrôleur de jeu, ce qui permet de finir de le positionner correctement sur le support sans autre précaution.

Avantageusement, la pièce mobile est amovible par rapport au support.

Avantageusement, la pièce mobile est amovible, de sorte à ce qu'une première pièce mobile permette d'attacher au support un premier modèle de contrôleur de jeu, et à ce qu'une deuxième pièce mobile, différente de la première pièce mobile, permette d'attacher au support un deuxième modèle de contrôleur de jeu L'invention permet d'envisager de fournir un kit comprenant le support et au moins deux pièces mobiles différentes, ou bien de proposer le support avec une seule pièce mobile pour un modèle précis de contrôleur de jeu.

Avantageusement, la pièce mobile est agencée pour entourer au moins partiellement le contrôleur de jeu, et elle comporte un partie flexible pour permettre un montage - démontage du contrôleur de jeu.

Avantageusement, la première portion de maintien est adaptée pour maintenir un téléphone portable.

Avantageusement, la première portion de maintien comprend au moins une mâchoire mobile agencée pour pincer au moins deux types de premier appareil électronique de tailles différentes.

Avantageusement, la pièce mobile est mobile en rotation par rapport à la pièce fixe.

Avantageusement, la deuxième portion de maintien comprend un arbre de rotation agencé entre la pièce fixe et la pièce mobile, l'arbre de rotation étant démontable par rapport au support.

Avantageusement, l'arbre de rotation comprend une molette filetée.

Avantageusement, le support comprend des moyens d'appui agencés pour laisser le support pour appareils électroniques, muni au moins du premier appareil électronique, reposer sur un plan de travail tout en garantissant une position inclinée aux moyens d'affichage.

Avantageusement, les moyens d'appui comprennent au moins deux pattes d'appui. Le support ainsi équipé de pattes d'appui peut reposer sur une table avec le premier appareil électronique orienté pour être regardé par un utilisateur. Autrement dit, le support permet de définir ainsi une position de stand pour le premier appareil électronique, typiquement un téléphone portable qui peut afficher un film ou une vidéo à regarder. Le support devient capable de maintenir un téléphone portable, un contrôleur de jeu et permet en plus, avec les pattes d'appui, de poser le tout sur une table pour regarder une vidéo diffusée/affichée par le téléphone portable.

Avantageusement, la première pièce mobile et/ou la deuxième pièce mobile comprend au moins une ouverture pour laisser accès à une partie du contrôleur de jeu.

Un deuxième aspect de l'invention concerne un kit comprenant un support selon le premier aspect, et au moins deux pièces mobiles différentes, chacune dédiée à un contrôleur de jeu spécifique.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente un premier exemple de support selon l'invention ;
- la figure 2 représente un deuxième exemple de support selon l'invention ;
- la figure 3 représente le support de la figure 2 équipé d'un téléphone portable et d'un contrôleur de jeu.

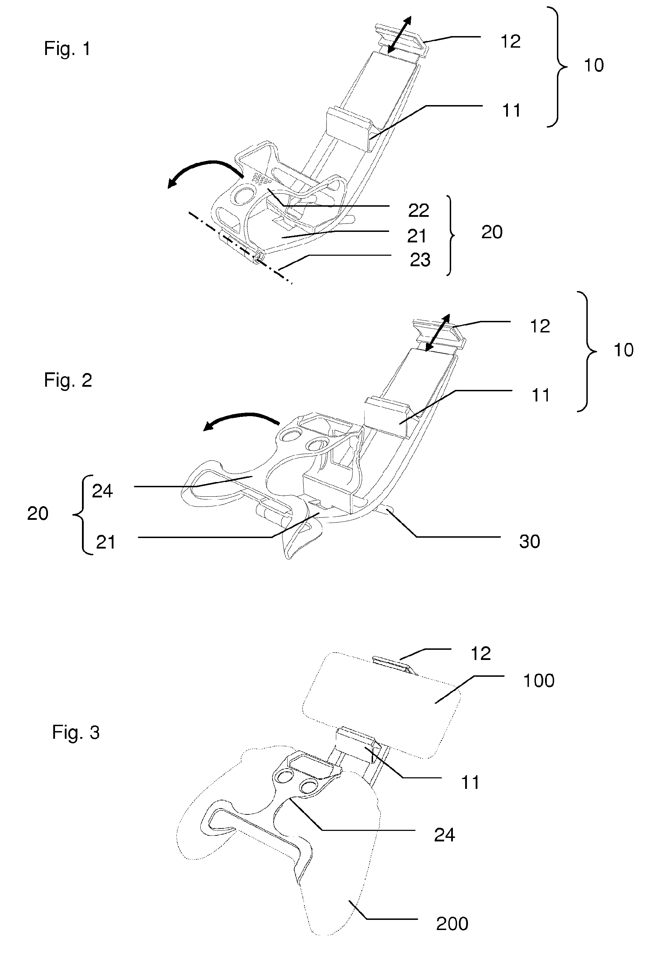

La figure 1 représente un support pour appareils électroniques comprenant une première portion de maintien 10 agencée pour recevoir un appareil électronique muni de moyens d'affichage (typiquement un téléphone portable avec grand écran tactile, dit "smartphone"), et une deuxième portion de maintien 20 agencée pour recevoir un contrôleur de jeu.

La première portion de maintien 10 est agencée pour pincer l'appareil électronique muni des moyens d'affichage, avec une butée fixe 11 et une mâchoire mobile 12 qui peut coulisser par rapport à la butée fixe 11. On peut prévoir un ressort de rappel pour forcer la mâchoire mobile 12 à revenir vers la butée fixe 11. On peut en alternative envisager des moyens de clipsage adaptés pour recevoir l'appareil électronique muni des moyens d'affichage.

La première portion de maintien 10 est reliée à la deuxième portion de maintien 20 par deux branches dont une partie inférieure forme une pièce fixe 21, sur laquelle est fixée une première pièce mobile 22. Cette dernière est mobile en rotation par rapport à la pièce fixe 21 autour d'un axe de rotation 23 entre une position fermée (telle que représentée sur la figure 1), et une position ouverte non représentée.

Dans la position fermée, la pièce mobile 22 est agencée pour maintenir sur le support un contrôleur de jeu, qui peut être retiré lorsque la pièce mobile 22 est en position ouverte.

La figure 2 représente une deuxième variante de support selon la présente invention. La première portion de maintien 10 est identique et ne sera pas re-décrite. La deuxième portion de maintien se distingue de la figure 1 uniquement par la pièce mobile 24 qui est différente de la pièce mobile 22 de la figure 1.

La pièce mobile 24 est mobile en rotation comme pour l'exemple précédent. Par contre, sa forme diffère de la pièce mobile 22 de la figure 1, pour pouvoir accueillir un contrôleur de jeu différent du contrôleur de jeu pouvant être reçu par la pièce mobile 22 de la figure 1. On comprend ainsi que le support selon l'invention peut accueillir deux modèles différents de contrôleurs de jeux, simplement en changeant la pièce mobile.

On remarque que chaque pièce mobile 22 ou 24 possède une forme spécifique, avec des ouvertures qui laissent un accès à des boutons ou des hauts parleurs, ou d'autres parties fonctionnelles du contrôleur auquel chaque pièce est dédiée. Chaque pièce mobile 22 et 24 est agencée pour entourer partiellement le contrôleur de jeu, chaque pièce mobile 22 et 24 est flexible pour permettre l'insertion ou le retrait du contrôleur de jeu, et on peut envisager de rendre seulement une portion flexible.

Sur la figure 2, on voit comment la pièce mobile 24 est maintenue en position fermée. Deux pattes 30 (une seule est visible sur la figure 2) traversent la pièce fixe 21 et se vissent dans la pièce mobile 24 pour la verrouiller en position fermée. Avantageusement, ces pattes 30 permettent de fournir un appui pour faire reposer le support sur un plan, tout en offrant une position inclinée vers l'utilisateur des moyens d'affichage de l'appareil électronique maintenu par la première portion de maintien 10. Ainsi l'utilisateur peut regarder un film aisément.

La figure 3 représente le support de la figure 2 avec un téléphone portable 100 maintenu entre la butée fixe 11 et la mâchoire mobile 12, et un contrôleur de jeu 200 maintenu par la pièce mobile 24 qui est en position fermée. Ainsi, l'utilisateur peut jouer à un jeu du téléphone portable 100, en utilisant le contrôleur de jeu 200.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Support pour appareils électroniques, comprenant :
- une première portion de maintien (10) agencée pour maintenir sur le support un premier appareil électronique (100) comprenant des moyens d'affichage,
- une deuxième portion de maintien (20) agencée pour maintenir sur le support un contrôleur de jeu (200),
**caractérisé en ce que** la deuxième portion de maintien (20) comprend au moins une pièce fixe (21) sur le support et une pièce mobile (22 ; 24) par rapport à la pièce fixe (21) entre une position fermée dite de maintien du contrôleur de jeu (200) et une position ouverte dans laquelle il est possible d'accoupler ou détacher le contrôleur de jeu (200) à la deuxième portion de maintien (20),
et **en ce que** la pièce mobile (22 ; 24) est adaptée à la forme du contrôleur de jeu (200), pour assurer le maintien du contrôleur (200) de jeu sur le support pour appareils électroniques.

2. Support pour appareils électroniques selon la revendication précédente, dans lequel la pièce mobile (22 ; 24) est amovible, de sorte à ce qu'une première pièce mobile (22) permette d'attacher au support un premier modèle de contrôleur de jeu (200), et à ce qu'une deuxième pièce mobile (22), différente de la première pièce mobile (22 ; 24), permette d'attacher au support un deuxième modèle de contrôleur de jeu (200).

3. Support pour appareils électroniques selon l'une des revendications précédentes, dans lequel la première portion de maintien (10) est adaptée pour maintenir un téléphone portable.

4. Support pour appareils électroniques selon l'une des revendications précédentes, dans lequel la première portion de maintien (10) comprend au moins une mâchoire mobile (12) agencée pour pincer au moins deux types de premier appareil électronique (100) de tailles différentes.

5. Support pour appareils électroniques selon l'une des revendications précédentes, dans lequel la pièce mobile (22 ; 24) est mobile en rotation par rapport à la pièce fixe (21).

6. Support pour appareils électroniques selon la revendication précédente, dans lequel la deuxième portion de maintien (20) comprend un arbre de rotation agencé entre la pièce fixe (21) et la pièce mobile (22 ; 24), l'arbre de rotation étant démontable par rapport au support.

7. Support pour appareils électroniques selon la revendication précédente, dans lequel l'arbre de rotation comprend une molette filetée.

8. Support pour appareils électroniques selon l'une des revendications précédentes, dans lequel le support comprend des moyens d'appui agencés pour laisser le support pour appareils électroniques, muni au moins du premier appareil électronique (100), reposer sur un plan de travail tout en garantissant une position inclinée aux moyens d'affichage.

9. Support pour appareils électroniques selon la revendication précédente, dans lequel les moyens d'appui comprennent au moins deux pattes d'appui (30).

10. Support pour appareils électroniques selon l'une des revendications précédentes, dans lequel la première pièce mobile (22) et/ou la deuxième pièce mobile (24) comprend au moins une ouverture pour laisser accès à une partie du contrôleur de jeu (200).

11. Kit comprenant un support selon l'une des revendications précédentes, et au moins deux pièces mobiles (22 ; 24) différentes, chacune dédiée à un contrôleur de jeu (200) spécifique.
